(19) Europäisches Patentamt
European Patent Office
Office européen des brevets

(11) **EP 3 644 108 A1**

(12) **EUROPEAN PATENT APPLICATION**

(43) Date of publication:
**29.04.2020 Bulletin 2020/18**

(51) Int Cl.:
**G02B 26/12** $^{(2006.01)}$   **G02B 27/01** $^{(2006.01)}$
**G02B 3/00** $^{(2006.01)}$   **G02B 27/48** $^{(2006.01)}$

(21) Application number: **19198417.8**

(22) Date of filing: **19.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2018 JP 2018200777**
**19.07.2019 JP 2019133724**

(71) Applicant: **Ricoh Company, Ltd.**
**Tokyo 143-8555 (JP)**

(72) Inventor: **OGINO, Shimpei**
**Tokyo, 143-8555 (JP)**

(74) Representative: **J A Kemp LLP**
**14 South Square**
**Gray's Inn**
**London WC1R 5JJ (GB)**

(54) **DISPLAY DEVICE, DISPLAY SYSTEM, AND MOBILE OBJECT**

(57) A display device, a display system, and a mobile object. The display device (10) includes a light source (11) configured to emit light, a light deflector (13) configured to deflect the light incident on the light deflector (13) in a main scanning direction and a sub-scanning direction, a divergence optical system (15) configured to diverge the light deflected by the light deflector (13) to form a virtual image (45) to be visually recognized by an observer (3), and a dioptric system (80) disposed on an optical path between the light deflector (13) and the divergence optical system (15) to refract the light deflected by the light deflector (13) to be made incident on the divergence optical system (15). In the display device (10), the dioptric system (80) has a refractive power different in the main scanning direction than in the sub-scanning direction.

EP 3 644 108 A1

**Description**

BACKGROUND

Technical Field

Embodiments of the present disclosure relate to a display device, a display system, and a mobile object.

Background Art

A display device, such as a head-up display (HUD), is used as an application for allowing a driver (an observer) to visually recognize various kinds of information (vehicle information, warning information, navigation information, and the like) in a mobile object, such as a vehicle, with limited movement of the driver's (observer's) eyes.

For example, JP-2013-061554-A describes a display device, which carries out two-dimensional scan with image light emitted from a light source in a main scanning direction and a sub-scanning direction by optical scanning means to form an intermediate image on a light divergence member, and projects the intermediate image onto a member that receives the projection, such as a windshield of a vehicle, in an enlarged scale. By doing so, the display device of JP-2013-061554-A displays a virtual image to be superimposed on the observer's sight.

Further, JP-2009-128659-A describes a display device characterized by including a light source, which generates a coherent light flux, and an optical plate, which includes a plurality of microlenses arranged at a pitch greater than a diameter of the light flux, and controls an angle of divergence of the light flux.

SUMMARY

Embodiments of the present disclosure described herein provide a display device, a display system, and a mobile object. The display device includes a light source configured to emit light, a light deflector configured to deflect the light incident on the light deflector in a main scanning direction and a sub-scanning direction, a divergence optical system configured to diverge the light deflected by the light deflector to form a virtual image to be visually recognized by an observer, and a dioptric system disposed on an optical path between the light deflector and the divergence optical system to refract the light deflected by the light deflector to be made incident on the divergence optical system. In the display device, the dioptric system has a refractive power different in the main scanning direction than in the sub-scanning direction. The display system includes the display device, an imaging optical system configured to form the virtual image with the light diverged by the divergence optical system, and a reflector configured to reflect light emitted from the imaging optical system. The mobile object includes the display system, and the reflector is a windshield configured to reflect the light diverged by the divergence optical system.

According to one aspect of the present disclosure, it is possible to provide a display device capable of displaying a virtual image having appropriate brightness.

BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.

FIG. 1 is a diagram illustrating a system configuration of a display system according to a first embodiment of the present disclosure;

FIG. 2 is a diagram illustrating a hardware configuration of a display device according to the first embodiment;

FIG. 3 is a diagram illustrating a functional configuration of the display device according to the first embodiment;

FIG. 4 is a diagram illustrating a specific configuration of a light-source device according to the first embodiment;

FIG. 5 is a diagram illustrating a specific configuration of a light deflector according to the first embodiment;

FIG. 6 is a diagram illustrating a specific configuration of a screen according to the first embodiment;

FIGS. 7A and 7B are diagrams illustrating the difference in effect caused by the difference in size between the diameter of incident light flux and the diameter of each lens in a microlens array;

FIG. 8 is a diagram illustrating the correspondence relation between a mirror of the light deflector and a scan range, according to an embodiment of the present disclosure;

FIG. 9 is a diagram illustrating the track of scanning line when two-dimensional scanning is performed, according to an embodiment of the present disclosure;

FIGS. 10A and 10B are diagrams illustrating the intensity distribution of the light flux diverged by a screen, according to an embodiment of the present disclosure;

FIG. 11 is a diagram illustrating an outline of an optical path length in the display system according to the first embodiment;

FIGS. 12A and 12B are schematic diagrams illustrating the relative positions of the elements of a display system according to a control sample;

FIGS. 13A and 13B are schematic diagrams illustrating the relative positions of the elements of a display system according to an embodiment of the present disclosure;

FIG. 14 is a diagram illustrating a system configuration of a display system according to a first modification of the present disclosure;

FIG. 15 is a diagram illustrating a system configuration of a display system according to a first modification of the present disclosure;

FIG. 16 illustrates a first optical element of a dioptric system according to an embodiment of the present disclosure;

FIG. 17 illustrates a second optical element of a dioptric system according to an embodiment of the present disclosure;

FIG. 18 illustrates a third optical element of a dioptric system according to an embodiment of the present disclosure;

FIG. 19 illustrates a fourth optical element of a dioptric system according to an embodiment of the present disclosure;

FIGS. 20A and 20B are diagrams illustrating an astigmatic difference produced by the optical elements of a dioptric system according to an embodiment of the present disclosure; and

FIG. 21 is a diagram illustrating the relation between a focal point of a dioptric system and the beam diameter of a light beam incident on a light deflector, according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

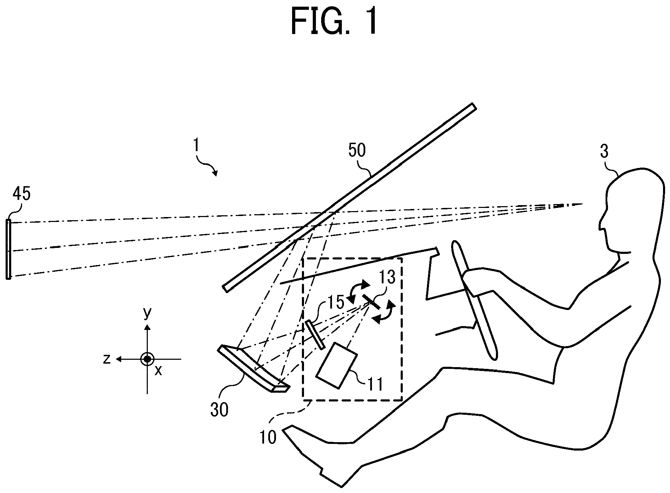

FIG. 1 is a diagram illustrating a system configuration of a display system 1 according to a first embodiment of the present disclosure. The display system 1 causes projection light projected from a display device 10 to be projected onto a transmissive and reflective member, so that an observer 3 can visually recognize a display image. The display image is an image displayed in a superimposed manner on the sight of the observer 3 as a virtual image 45. The display system 1 is provided in, for example, a mobile object such as a vehicle, an aircraft, or a ship, or a non-mobile object such as a steering simulation system or a home theater system. In the present embodiment, a case where the display system 1 is provided in a car, which is an example of the mobile object, is described. Note that the use of the display system 1 is not limited to the above.

The display system 1 allows the observer 3 (a driver) to visually recognize navigation information that is necessary for driving the vehicle (information such as a vehicle speed, route information, a distance to the destination, the name of current location, existence and position of an object (target) ahead of the vehicle, a sign for the speed limit or the like, and traffic congestion information), via a windshield 50, for example. In this case, the windshield 50 serves as a transmissive and reflective member that transmits a part of light incident on the windshield 50 and reflects at least a part of the remainder. A distance between a viewpoint position of the observer 3 and the windshield 50 is several tens of centimeters to one meter or so.

The display system 1 includes a display device 10, a free-form surface mirror 30, and the windshield 50. The display device 10 is, for example, a head-up display device (HUD device) mounted in a car, which is an example of the mobile object. The display device 10 is arranged at an arbitrary position according to the interior design of the car. The display device 10 may be disposed, for example, below a dashboard of the car, or may be embedded in the dashboard.

The display device 10 includes a light-source device 11, a light deflector 13, and a screen 15. The light-source device 11 is a device that radiates a laser beam emitted from a light source to the outside of the device. The light-source device 11 may radiate a laser beam obtained by combining laser beams of three colors, R, G, and B, for example. The laser beam emitted from the light-source device 11 is guided to a reflection surface of the light deflector 13. The light-source device 11 includes a semiconductor light-emitting element such as a laser diode (LD) as the light source. The light source is not limited to the above, and may include a semiconductor light-emitting element such as a light-emitting diode (LED).

The light deflector 13 is a device which changes a direction of travel of the laser beam using Micro Electro Mechanical Systems (MEMS) or the like. The light deflector 13 is configured by using scanning means, such as a single minute MEMS mirror that swings about two axes orthogonal to each other, or a mirror system formed of two MEMS mirrors that swing or rotate about a single axis. The screen 15 is scanned with the laser beam emitted from the light deflector 13. The light deflector 13 may be configured by using a polygon mirror or the like, not limited to the MEMS mirror.

The screen 15 is a divergence member having the function of diverging the laser beam at a predetermined divergence angle. The screen 15 includes a transmissive optical element having a light diffusion effect, such as a microlens array (MLA) or a diffusion plate, as a form of an exit pupil expander (EPE), for example. Alternatively, the screen 15 may include a reflective optical element having a light diffusing effect such as a micromirror array. As the laser beam emitted from the light deflector 13 is applied onto the screen 15 to scan the screen 15, an intermediate image 40, which is a two-dimensional image, is formed on the screen 15.

A projection method of the display device 10 includes a "panel method" and a "laser scanning method". The "panel method" forms the intermediate image 40 by an imaging device such as a liquid crystal panel, a digital mirror device (DMD) panel, or a fluorescent display tube (VFD). The "laser scanning method" forms the intermediate image 40 by a scan performed by the scanning means with the laser beam emitted from the light-source device 11.

The display device 10 according to the first embodiment employs the latter method, namely, the "laser scanning method". Since the "laser scanning method" can assign light emission or light extinction to each pixel, generally, a high-contrast image can be formed. Alternatively, the display device 10 may employ the "panel method" as the projection method.

The virtual image 45, which is projected onto the free-form surface mirror 30 and the windshield 50 by the laser beam (light flux) emitted from the screen 15, is enlarged relative to the intermediate image 40 and displayed. The free-form surface mirror 30 is designed and arranged so as to offset a tilt, distortion, misalignment, and the like of an image caused by the curved shape of the windshield 50. The free-form surface mirror 30 may be installed in such a way that the free-form surface mirror 30 can be rotated about a predetermined rotation axis. The free-form surface mirror 30 can thereby adjust a reflection direction of the laser beam (light flux) emitted from the screen 15, and change the display position of the virtual image 45.

The free-form surface mirror 30 is designed by using ready-made optical design simulation software so that free-form surface mirror 30 has fixed condensing power, in order to bring an imaging position of the virtual image 45 to a desired position. In the display system 1, the condensing power of the free-form surface mirror 30 is set such that the virtual image 45 is displayed at a position (or, a depth position) of, for example, 1 m or more and 30 m or less (preferably, 10 m or less) away from the viewpoint position of the observer 3. The free-form surface mirror 30 may be a concave mirror or a curved mirror. The free-form surface mirror 30 is an example of an imaging optical system.

The windshield 50 is a transmissive and reflective member having the function of transmitting a part of a laser beam (light flux) and reflecting at least a part of the remainder (namely, a partial reflection function). The windshield 50 serves as a semi-transmissive mirror allowing the observer 3 to visually recognize the scenery ahead and the virtual image 45. The virtual image 45 includes image information for allowing the observer 3 to visually recognize the vehicle information (speed, travel distance, and the like), navigation information (route guidance, transportation information, and the like), and warning information (such as collision warning), for example. The transmissive and reflective member may be a front windshield provided separately from the windshield 50. The windshield 50 is an example of a reflective member.

The virtual image 45 may be displayed so as to overlap the scenery ahead of the windshield 50. Also, the windshield 50 is not flat, but is curved. Therefore, the imaging position of the virtual image 45 is determined by the curved surfaces of the free-form surface mirror 30 and the windshield 50. The windshield 50 may use a semi-transmissive mirror (a combiner) as an individual transmissive and reflective member having the partial reflection function.

With such a configuration, a laser beam (light flux) emitted from the screen 15 is projected toward the free-form surface mirror 30, and is reflected by the windshield 50. The observer 3 can visually recognize the virtual image 45, which is the enlarged image of the intermediate image 40 formed on the screen 15, by way of the light reflected from the windshield 50.

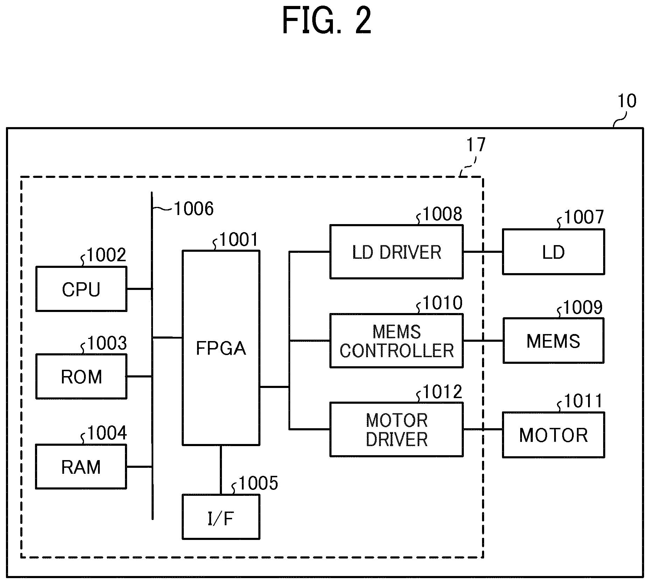

FIG. 2 is a diagram illustrating a hardware configuration of the display device 10 according to the first embodiment. The hardware configuration illustrated in FIG. 2 may have similar structures in each of the embodiments, and the constituent elements may be added or deleted as necessary.

The display device 10 includes a control device 17 for controlling the operation of the display device 10. The control device 17 is a controller for a circuit board, an IC chip, and the like mounted inside the display device 10. The control device 17 includes a field-programmable gate array (EPGA) 1001, a central processing unit (CPU) 1002, a read-only memory (ROM) 1003, a random access memory (RAM) 1004, an interface (I/F) 1005, a bus line 1006, an LD driver 1008, a MEMS controller 1010, and a motor driver 1012.

The FPGA 1001 is an integrated circuit for which a change of settings by a designer of the display device 10 is possible. Each of the LD driver 1008, the MEMS controller 1010, and the motor driver 1012 generates a drive signal in response to a control signal from the FPGA 1001. The CPU 1002 is an integrated circuit which performs processing to control the entire display device 10. The ROM 1003 is a storage device which stores programs for controlling the CPU 1002. The RAM 1004 is a storage device which serves as a work area of the CPU 1002. The I/F 1005 is an interface for communicating with external devices. The I/F 1005 is coupled to, for example, a controller area network (CAN) of a car.

An LD1007 is, for example, a semiconductor light-emitting element which constitutes a part of the light-source device 11. The LD driver 1008 is a circuit which generates a drive signal to drive the LD 1007. A MEMS 1009 is a device which constitutes a part of the light deflector 13, and shifts the position of a scan mirror. The MEMS controller 1010 is a circuit which generates a drive signal to drive the MEMS 1009. A motor 1011 is an electric motor which rotates a rotation axis of the free-form surface mirror 30. The motor driver 1012 is a circuit which generates a drive signal to drive the motor 1011.

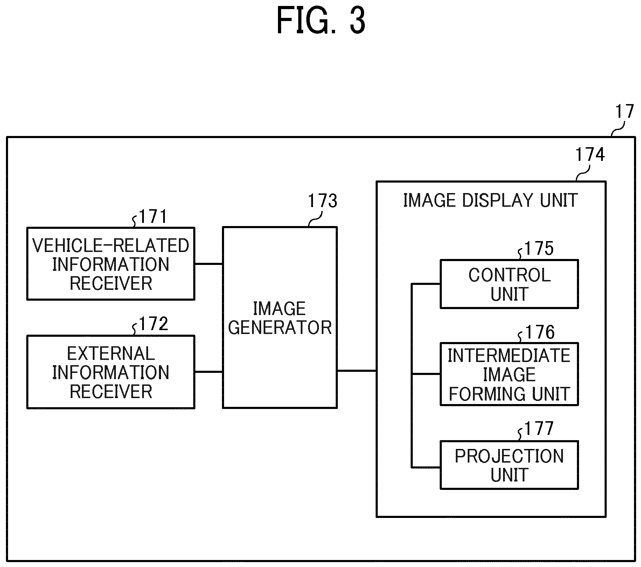

FIG. 3 is a diagram illustrating a functional configuration of the display device 10 according to the first embodiment. Functions realized by the display device 10 include the functions of a vehicle information receiver 171, an external information receiver 172, an image generator 173, and an image display unit 174.

The vehicle information receiver 171 includes the function of receiving information of the car (information such as speed and travel distance) from the CAN or the like. The vehicle information receiver 171 is realized by the processing of the I/F 1005 and the CPU 1002 illustrated in FIG. 2, and the programs and the like stored in the ROM 1003.

The external information receiver 172 includes the function of receiving information outside the car (such as position information provided by a GPS, and route information or transportation information provided by a navigation system) from an external network. The external information receiver 172 is realized by the processing of the I/F 1005 and the CPU 1002 illustrated in FIG. 2, and the programs and the like stored in the ROM 1003.

The image generator 173 includes the function of generating image information for displaying the intermediate image 40 and the virtual image 45, on the basis of the information input by the vehicle information receiver 171 and the external information receiver 172. The image generator 173 is realized by the processing of the CPU 1002 illustrated in FIG. 2, and the programs and the like stored in the ROM 1003.

The image display unit 174 includes the function of forming the intermediate image 40 on the screen 15, on the basis of the display information generated by the image generator 173, and projecting the laser beam (light flux) forming the intermediate image 40 toward the windshield 50, thereby displaying the virtual image 45. The image display unit 174 is realized by the processing of the CPU 1002, the FPGA 1001, the LD driver 1008, the MEMS controller 1010, and the motor driver 1012 illustrated in FIG. 2, and the programs and the like stored in the ROM 1003.

The image display unit 174 includes a control unit 175, an intermediate image forming unit 176, and a projection unit 177. The control unit 175 generates a control signal for controlling the operation of the light-source device 11 and the light deflector 13, in order to form the intermediate image 40. Also, the control unit 175 generates a control signal for controlling the operation of the free-form surface mirror 30, in order to display the virtual image 45 at a predetermined position.

The intermediate image forming unit 176 forms the intermediate image 40 on the screen 15, on the basis of the control signal generated by the control unit 175. The projection unit 177 projects the laser beam forming the intermediate image 40 onto the transmissive and reflective member (windshield 50 or the like), in order to form the virtual image 45 to be visually recognized by the observer 3.

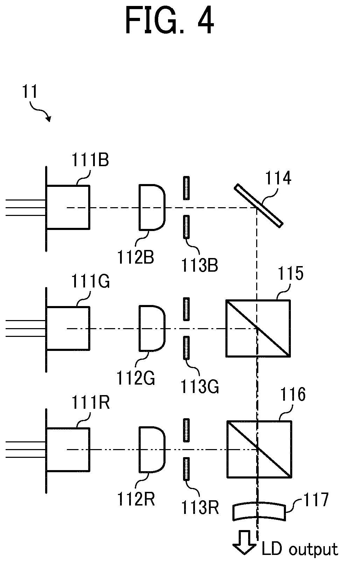

FIG. 4 is a diagram illustrating a specific configuration of a light-source device 11 according to the first embodiment. The light-source device 11 includes light source elements 111R, 111G, and 111B (hereinafter referred to as light source elements 111 when the light source elements do not need to be distinguished from each other), coupling lenses 112R, 112G, and 112B, apertures 113R, 113G, and 113B, composite elements 114, 115, and 116, and a lens 117.

The light source elements 111R, 111G, and 111B of three colors (R, G, B) are, for example, laser diodes (LDs) each having one or more luminous points. The light source elements 111R, 111G, and 111B radiate laser beams (light fluxes) having wavelengths of $\lambda R$, $\lambda G$, and $\lambda B$ different from each other (for example, $\lambda R$ being 640 nm, $\lambda G$ being 530 nm, and $\lambda B$ being 445 nm).

Each of the radiated laser beams (light fluxes) is coupled by the coupling lenses 112R, 112G, and 112B. The coupled lasers (light fluxes) are shaped by the apertures 113R, 113G, and 113B, respectively. The apertures 113R, 113G, and 113B have shapes (for example, circular, elliptical, rectangular or square shapes) according to predetermined conditions such as the angle of divergence of the laser beam (light flux).

The laser beams (light fluxes) shaped by the apertures 113R, 113G, and 113B are combined by the three composite elements 114, 115, and 116. Each of the composite elements 114, 115, 116 is a plate-shaped or prism-shaped dichroic mirror, and reflects or transmits the laser beam (light flux) according to the wavelength, and combines the reflected or transmitted laser beams into a single light flux. The combined light flux passes through the lens 117, and is guided to the light deflector 13.

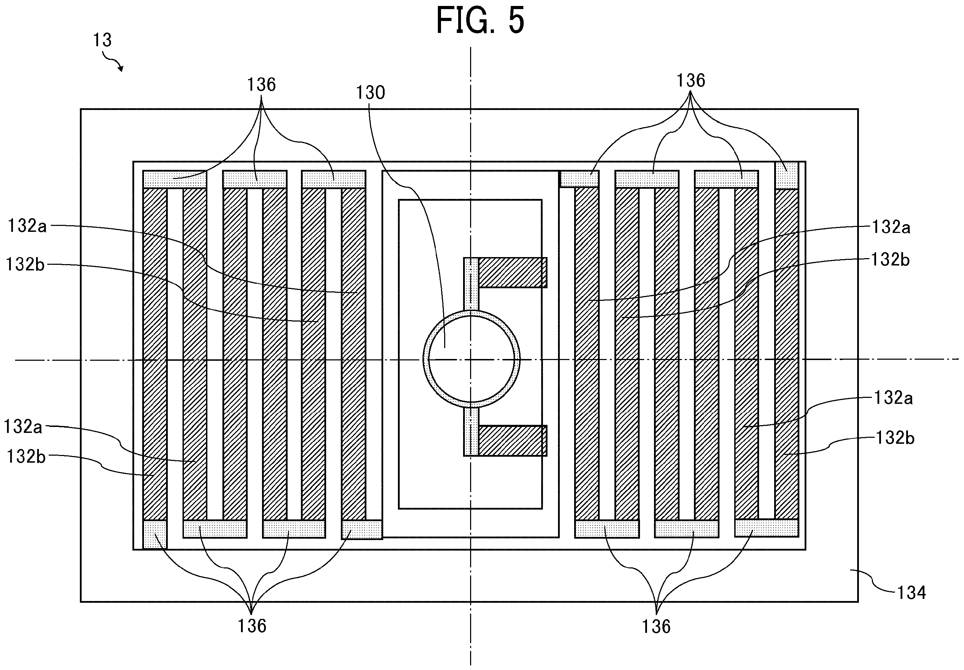

FIG. 5 is a diagram illustrating a specific configuration of a light deflector 13 according to the first embodiment. The light deflector 13 is a MEMS mirror manufactured by a semiconductor process, and includes a mirror 130, a meandering beam portion 132, a frame member 134, and a piezoelectric member 136. The light deflector 13 is an example of a scanner.

The mirror 130 includes a reflection surface which reflects the laser beam emitted from the light-source device 11 to the screen 15. In the light deflector 13, a pair of meandering beam portions 132 is formed with the mirror 130 interposed therebetween. The meandering beam portion 132 includes a plurality of loop-back portions. The loop-back portions are formed of first beam portions 132a and second beam portions 132b that are alternately arranged. The meandering beam portion 132 is supported by the frame member 134. The piezoelectric member 136 is disposed to couple the first beam portion 132a and the second beam portion 132b that are adjacent to each other. The piezoelectric member 136 applies different voltages to the first beam portion 132a and the second beam portion 132b to generate a warp in each of the beam portions 132a and 132b.

As a result, the adjacent beam portions 132a and 132b bend in different directions. As the warp accumulates, the mirror 130 rotates in a vertical direction about a horizontal axis. Owing to such a configuration, the light deflector 13 can perform optical scanning in the vertical direction at a low voltage. Optical scanning in a horizontal direction about a vertical axis is performed by resonance using a torsion bar or the like coupled to the mirror 130.

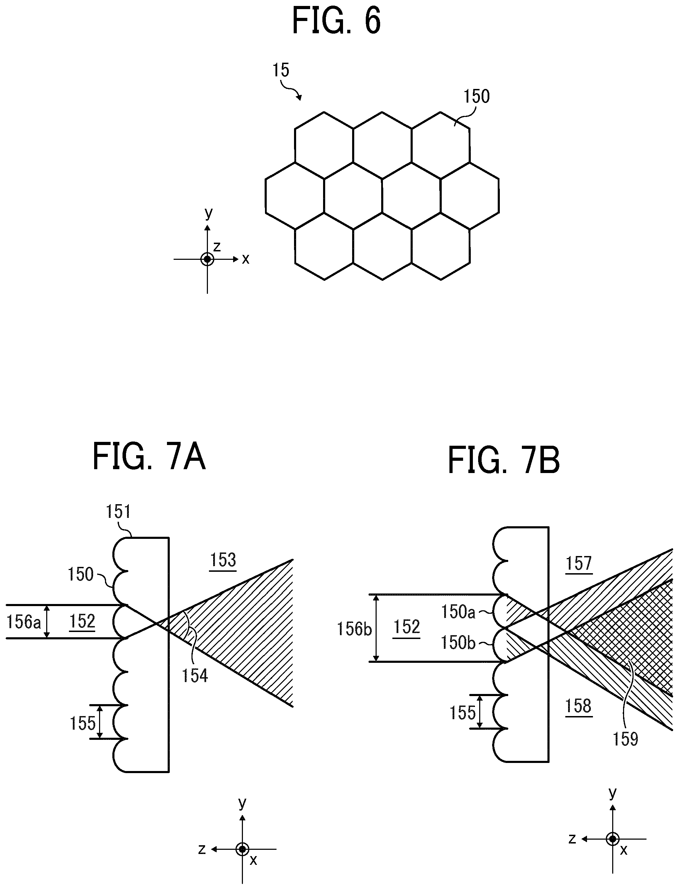

FIG. 6 is a diagram illustrating a specific configuration of a screen 15 according to the first embodiment. Further, the screen 15 is a divergence member which diverges the laser beam at a predetermined divergence angle. The screen 15 illustrated in FIG. 6 has a micro lens array structure in which a plurality of microlenses 150 of a hexagonal shape are arranged closely without gaps. A width (namely, a distance between two opposing sides) of each of the microlenses 150 is 200 $\mu$m or so. In the screen 15, the plurality of microlenses 150 can be arranged at high density by making the shape of each of the microlenses 150 hexagonal.

The shape of each one of the microlenses 150 is not limited to hexagonal, but may be, for example, rectangular or triangular. In addition, although the figure illustrates the structure in which a plurality of microlenses 150 are regularly arranged as an example, the arrangement of the microlenses 150 is not limited to the above. That is, the microlenses 150 may be arranged such that the centers of the microlenses 150 are offset from each other, for example, so that irregular arrangement is formed. If such eccentric arrangement is to be adopted, the shapes of the microlenses 150 are different from each other.

FIGS. 7A and 7B are views for explaining a difference in effect caused by a difference in the size between a diameter of an incident light flux and a lens diameter in a microlens array. In FIG. 7A, the screen 15 is formed of an optical plate 151 in which the microlenses 150 are arranged in order. When incident light 152 is applied onto the optical plate 151 to perform a scan with the incident light 152, the incident light 152 is diverged by one of the microlenses 150, and turns into divergent light 153. The screen 15 can diverge the incident light 152 at a desired divergence angle 154 by the structure of the microlenses 150. The pitch 155 of the microlenses 150 is designed to be larger than a diameter 156a of the incident light 152. Consequently, in the screen 15, interference between the lenses does not occur, and no speckle (speckle noise) is caused.

FIG. 7B illustrates an optical path of the divergent light when a diameter 156b of the incident light 152 is twice as large as the pitch 155 of the microlenses 150. The incident light 152 is made incident on two microlenses, namely, microlenses 150a and 150b, to generate divergent light beams 157 and 158. When the divergent light beams are generated, since the two divergent light beams exist in an area 159, interference of light may occur. When the interference light enters the observer's eyes, speckle is visually recognized.

In consideration of the above, in order to reduce the speckle, the pitch 155 of the microlenses 150 is designed to be larger than a diameter 156 of the incident light. Referring to FIGS. 7A and 7B, explanation has been given on the basis of a convex lens. However, it is assumed that the same advantage can be obtained also in the form of a concave lens.

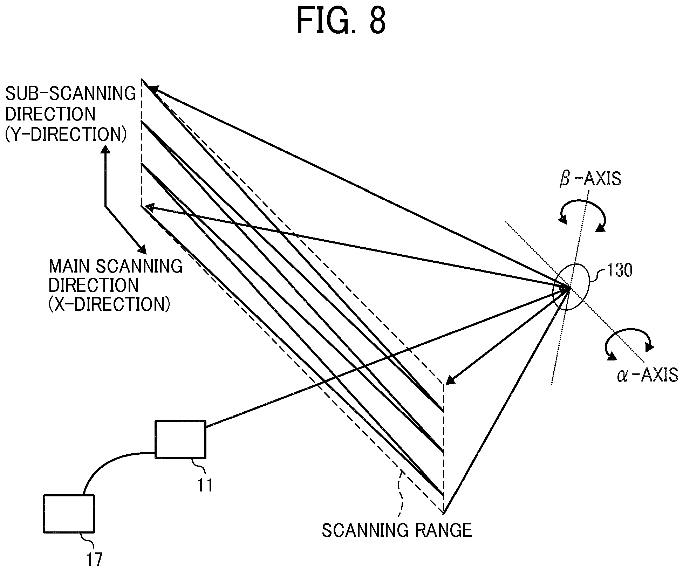

FIG. 8 is a diagram illustrating the correspondence relation between a mirror of the light deflector 13 and a scan range, according to the present embodiment. As regards each of the light source elements of the light-source device 11, emission intensity, lighting timing, and an optical waveform are controlled by the FPGA 1001. Each of the light source elements of the light-source device 11 is driven by the LD driver 1008, and emits a laser beam. As illustrated in FIG. 8, a laser beam obtained from the laser beams emitted from the respective light source elements and combined in the optical path is two-dimensionally deflected by the mirror 130 of the light deflector 13 about an $\alpha$-axis and a $\beta$-axis. Further, the laser beam is radiated onto the screen 15 as scan light via the mirror 130. In other words, the screen 15 is two-dimensionally scanned through main scanning and sub-scanning by the light deflector 13.

The scan range is the entire range subjected to scanning by the light deflector 13. The scan light scans the scan range of the screen 15 in a vibrating manner (that is to say, performs reciprocating scanning) in a main scanning direction (X-axis direction) at a high frequency of 20,000 to 40,000 Hz or so. In contrast, the scan light scans the same in one way in a sub-scanning direction (Y-axis direction) at a low frequency of several tens of hertz (Hz) or so. In other words, the light deflector 13 performs a raster scan on the screen 15. In this case, as the display device 10 performs light emission control of each of the light source elements in accordance with the scanning position (the position of the scan light), rendering per pixel or display of a virtual image can be carried out.

Time taken to render one screen, more specifically, a scanning time for one frame (one period of two-dimensional scanning), is several tens of milliseconds (msec) since a sub- scan rate is several tens of Hz as described above. For example, in a case where a main scan rate is 20000 Hz and the sub-scan rate is 50 Hz, the scanning time for one frame is 20 msec.

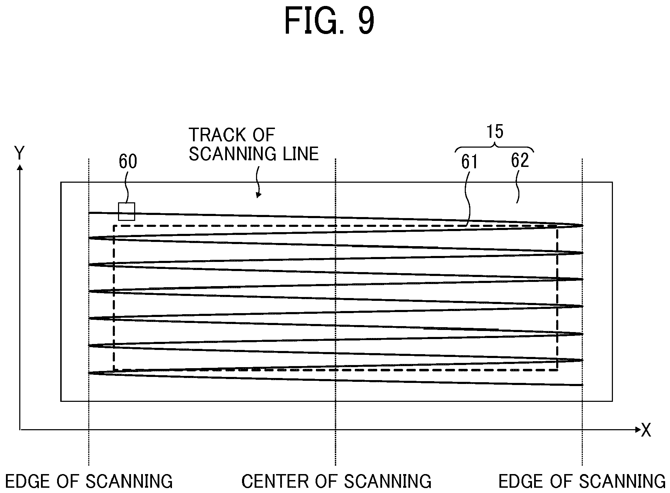

FIG. 9 is a diagram illustrating the track of a scanning line when two-dimensional scanning is performed, according to the present embodiment. As illustrated in FIG. 9, the screen 15 includes an image area 61 (effective scanning area) in which the intermediate image 40 is rendered (that is to say, which is irradiated with light modulated according to the image data), and a frame area 62 surrounding the image area 61.

The scan range is assumed as a range in which the image area 61 and a part of the frame area 62 (that is to say, a portion near the outer edge of the image area 61) of the screen 15 are combined. In FIG. 9, a zigzag line indicates a track of the scanning line in the scan range. In FIG. 9, the number of scanning lines is less than the actual number for convenience.

As described above, the screen 15 includes a transmissive optical element having a light diffusion effect such as a microlens array. The image area 61 is not necessarily rectangular or planar, but may be polygonal or curved. Further, the screen 15 may be a flat plate or a curved plate having no light diffusion effect. Furthermore, the image area 61 may be formed of a reflective element having a light diffusing effect such as a micromirror array, according to the layout of the device.

The screen 15 is provided with a synchronous detection system 60 including a light receiving element in a peripheral area of the image area 61 (that is to say, a part of the frame area 62) of the scan range. In FIG. 9, the synchronous detection system 60 is arranged at a corner of the image area 61 on the -X side and the +Y side of the image area 61. The synchronous detection system 60 detects the operation of the light deflector 13, and outputs, to the FPGA 1001, a synchronization signal for determining scan start timing and scan end timing.

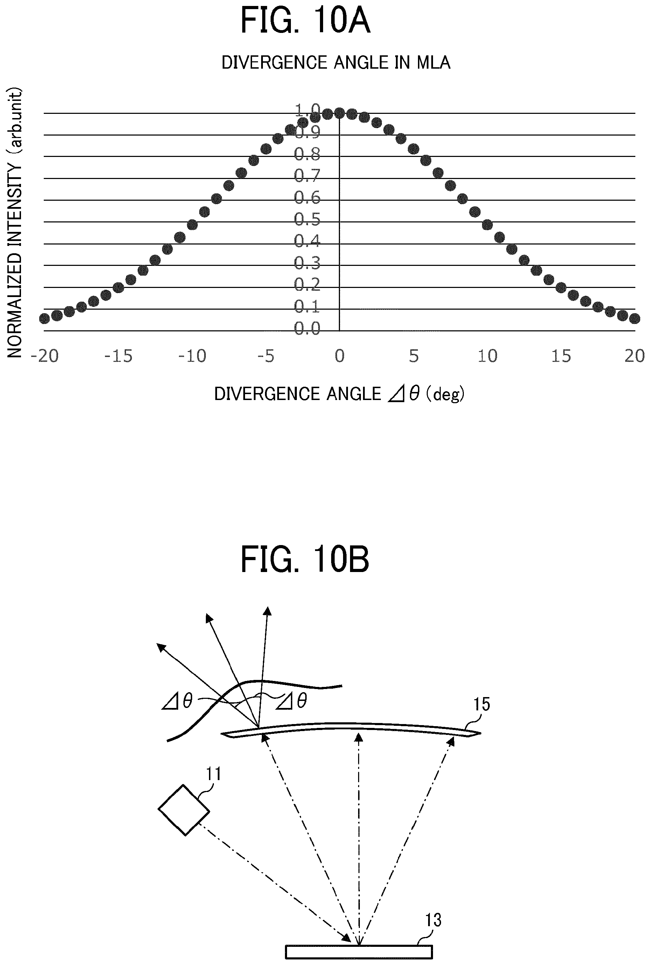

Next, optical design of the display system 1 according to the first embodiment is described. The relationship between an angle of divergence and the intensity of the divergent light generated on the screen 15 is described referring to FIGS. 10A and 10B.

FIG. 10A is a graph illustrating an intensity distribution of a light flux diverged by a screen. The horizontal axis in FIG. 10A represents divergence angle $\Delta\theta$ of the divergent light at the screen 15 relative to a light flux incident on the screen 15. As illustrated in FIG. 10A, the divergent light has an intensity profile in which the intensity is reduced as the divergence angle $\Delta\theta$ is increased. The divergence angle $\Delta\theta$ is an angular difference between the incident angle of light made incident on the screen 15 and the center of the divergence angle of the divergent light, which is generated from the light being incident on the screen 15 and diverged by the screen 15 to reach a viewpoint of the observer 3.

Further, as illustrated in FIG. 10B, the greater the divergence angle $\Delta\theta$ is, relative to the light fluxes being incident on both edges of the intermediate image 40 that is formed on the screen 15, the lower the intensity of the divergent light becomes. When the intensity of the divergent light at both edges of the intermediate image 40 is reduced, the brightness of the virtual image 45 near an edge of the virtual image 45 is reduced. As a result, the in-plane degradation of the virtual image 45 to be visually recognized by the observer 3 occurs.

The present embodiment proposes optimal optical design for the display device 10, in order to allow the observer 3 to visually recognize the virtual image 45 having a good brightness distribution while suppressing reduction in the brightness at the edge of the virtual image 45 to be visually recognized by the observer 3.

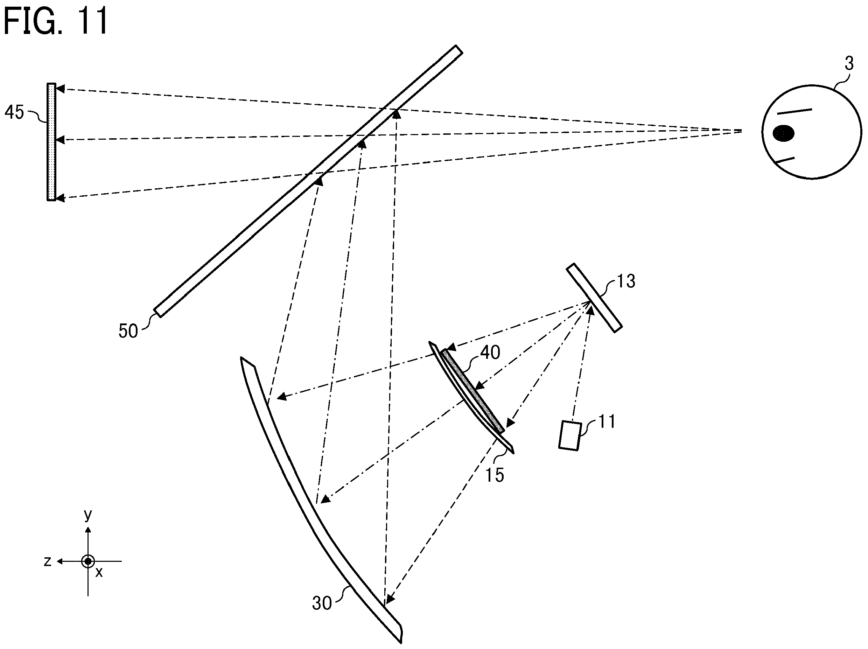

FIG. 11 is a diagram illustrating an outline of the optical path length in the display system 1 according to the first embodiment. In FIG. 11, each optical path length is measured by using the optical path through which an image center passes when observation is made from an eyellipse center (reference eye point) in each constituent element of the display system 1. It is assumed that the image center substantially conforms to the geometric center of each constituent element. Note that the eyellipse center (reference eye point) is the reference viewpoint position for the observer 3, and is the center of an eye-box.

The observer 3 (for example, the driver who drives the car) visually recognizes the virtual image 45 from the eye-box (an area near the eyes of the observer 3) along the optical path of light reflected by the windshield 50. The eye-box is intended as a range in which the observer 3 can visually recognize the virtual image 45 without adjusting the viewpoint position. Specifically, the eye-box is equivalent to or subordinate to an eye range of drivers for automobiles (JIS D0021). The eye-box is set on the basis of the eyellipse, which is a spatial area where the eye point of a driver seated on a seat can exist, as an area in which the driver can visually recognize the virtual image 45.

In the display system 1, an optical path length from the light deflector 13 to the image center of the intermediate image 40 formed on the screen 15 is defined as Ta, an optical length to the central position of an area at which the light flux diverged from the intermediate image 40 passes through the free-form surface mirror 30 is defined as Tb, and an optical path length between the center of the free-form surface mirror 30 and the center of the virtual image 45 is defined as Tc.

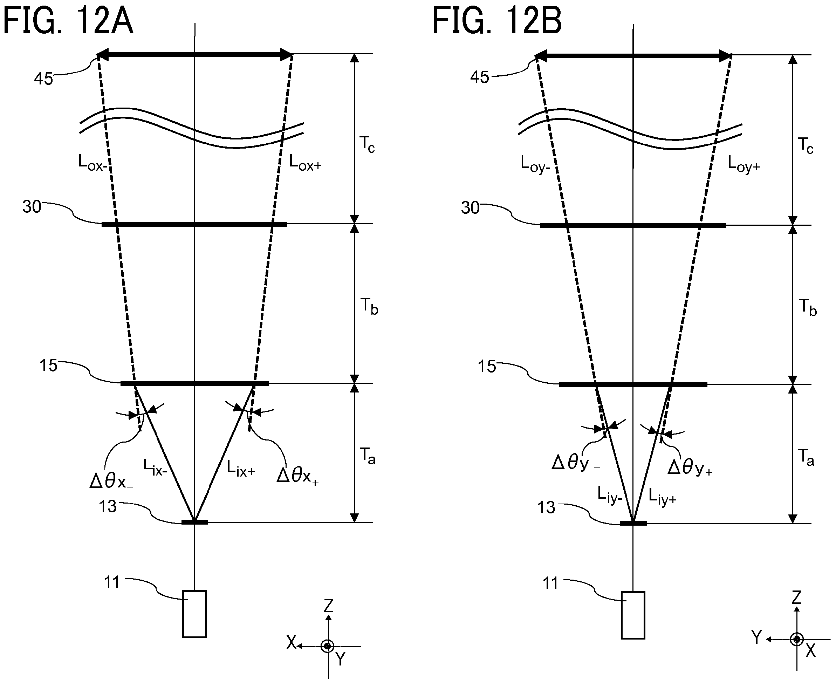

The light flux emitted from the light-source device 11 enters the light deflector 13, and is radiated onto the screen 15 for two-dimensional scan. The intermediate image 40 illustrated in FIG. 11 is thereby formed on the screen 15. As described above, the screen 15 is provided with a light divergence member such as a microlens array, and the light flux applied on the screen 15 for scanning passes through the screen 15 to be diverged at a predetermined divergence angle. In FIGS. 12A and 12B, a ray of light emitted from the screen 15 indicates the central ray of the divergent light. The light flux emitted from the screen 15 is made incident on the free-form surface mirror 30.

The surface shape of the free-form surface mirror 30 is designed to reduce optical strain that occurs in the windshield 50 illustrated in FIG. 11. The light ray made incident on the free-form surface mirror 30 is reflected by the free-form surface mirror 30 in accordance with the surface shape of the free-form surface mirror. The reflected light flux is then made incident on the windshield 50, and reaches a viewpoint at one point within at least the eyellipse area including at least the eyellipse center (reference eye point). The light flux made incident on the windshield 50 is reflected according to the surface shape of the windshield 50.

FIGS. 12A and 12B are schematic diagram illustrating the optical path between the elements of the display system 1 according to the present embodiment. In FIGS. 12A and 12B, the optical path length Ta and the optical path length Tb defined referring to FIG. 11 are indicated, and the optical path length between the center of the free-form surface mirror 30 and the center of the virtual image 45 is indicated as Tc. FIG. 12A illustrates a cross section perpendicular to the sub-scanning direction (Y direction) and parallel to the main scanning direction (X direction) of the scanning by the light deflector 13. In other words, the right and left direction as seen on the plane of FIG. 12A corresponds to the main scanning direction. FIG. 12B illustrates a cross section perpendicular to the main scanning direction (X direction) and parallel to the sub-scanning direction (Y direction). In other words, the right and left direction as seen on the plane of FIG. 12B corresponds to the sub-scanning direction.

In the explanation of FIGS. 12A and 12B, of the light fluxes of deflected light generated by the light deflector 13 for forming the intermediate image 40, beams of the deflected light corresponding to image edges are defined as a line Li+ and a line Li-. A line Lix+ and a line Lix- in FIG. 12A indicate beams of the incident light on the screen 15 corresponding to both edges of the image in the main scanning direction, respectively. A line Liy+ and a line Liy- in FIG. 12B indicate beams of the incident light on the screen 15 corresponding to both edges of the image in the sub-scanning direction, respectively.

Further, in the explanation of FIGS. 12A and 12B, a line Lo+ and a line Lo-connecting between the screen 15 and the image edges of the virtual image 45 correspond to optical paths in which the light rays of the intermediate image 40 at the image edges travel toward the eyellipse center (reference eye point). Furthermore, a line Lox+ and a line Lox- in FIG. 12A indicate the optical paths from the screen 15 corresponding to both edges of the image in the main scanning direction, respectively. A line Loy+ and a line Loy- in FIG. 12B indicate the optical paths from the screen 15 corresponding to both edges of the image in the sub-scanning direction, respectively.

As has been described referring to FIGS. 10A and 10B, the greater the divergence angle $\Delta\theta$ is, relative to the light fluxes being incident on both edges of the intermediate image 40 that is formed on the screen 15, the lower the intensity of the divergent light becomes. When the intensity of the divergent light at both edges of the intermediate image 40 is reduced, the brightness of the virtual image 45 near the edge of the virtual image 45 is reduced. Therefore, in order achieve visual recognition of a virtual image without having brightness unevenness in the eyellipse area to be visually recognized by the observer 3, preferably, the divergence angle $\Delta\theta$, which is to be formed relative to the light flux being incident on both edges of the intermediate image 40 formed on the screen 15, should be made as small as possible within the range of enabling the light ray to reach within the eye-box. Also, in order to suppress brightness reduction at the image edge of the virtual image 45, preferably, an angular difference $\Delta\theta+$ formed between the line Li+ and the line Lo+, and an angular difference $\Delta\theta-$ formed between the line Li- and the line Lo- as illustrated in FIGS. 12A and 12B should be made as small as possible.

When a width of the eye-box in the main scanning direction is greater than a width of the eye-box in the sub-scanning direction, the brightness of the virtual image 45 as seen from the eye-box edge in the main scanning direction is less than the brightness of the virtual image 45 as seen from the eye-box edge in the sub-scanning direction. In particular, brightness reduction at the image edge of the virtual image 45 in the main scanning direction is greater than the brightness reduction at the image edge of the virtual image 45 in the sub-scanning direction.

It holds true that when the width of the virtual image 45 is constant and the width of the eye-box is increased, the width of the virtual image 45 per unit length of the eye-box is reduced. Therefore, the above can be rephrased as the width of the eye-box being constant and the width of virtual image 45 being reduced (that is to say, an angle between the line Lo+ and the line Lo- being reduced) virtually.

In other words, when the width of the eye-box in the main scanning direction is greater than the width of the same in the sub-scanning direction, angular differences $\Delta\theta x+$ and $\Delta\theta x-$ in the main scanning direction are greater than angular differences $\Delta\theta y+$ and $\Delta\theta y-$ in the sub-scanning direction, respectively. For example, when Ta is equal to 100, Tb is equal to 300, Tc is equal to 3100, Td, which corresponds to a distance from the eye-box to the virtual image 45 (or, a virtual image distance), is equal to 3600, Ex, which corresponds to a width of the eye-box in the main scanning direction, is equal to 130, and Ey, which corresponds to a width of the eye-box in the sub-scanning direction, is 40, while Δθx+ is 11.2°, Δθy+ is 4.1°. As a result, the brightness reduction is greater in the image edge of the virtual image 45 in the main scanning direction than the image edge in the sub-scanning direction.

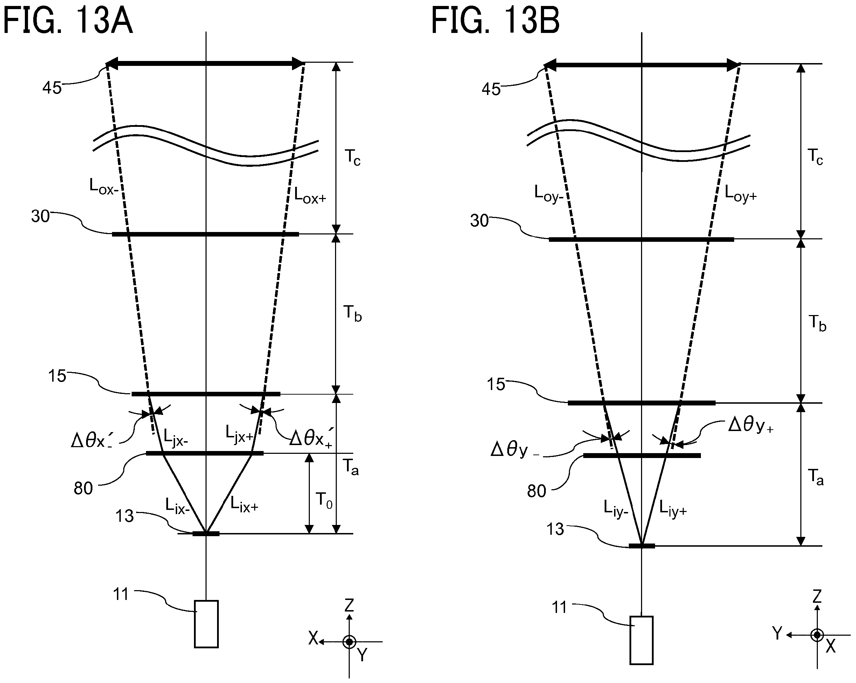

FIGS. 13A and 13B illustrate an optical system in which a dioptric system 80 having a refractive power of refracting light is further arranged, in addition to each of the constituent features illustrated in FIGS. 12A and 12B. The dioptric system 80 is disposed in the optical path between the light deflector 13 and the screen 15, as illustrated in FIG. 13. That is, the dioptric system 80 refracts the deflected light emitted from the light deflector 13, and the refracted deflected light enters the screen 15. The dioptric system 80 is an optical system having different refractive powers in the main scanning direction and the sub-scanning direction. Therefore, brightness reduction at the image edge of the virtual image 45 can be suppressed by changing the angle of incidence of the deflected light made incident on the screen 15.

In the present embodiment, as an example in which the refractive powers to be exhibited are different in the main scanning direction and the sub-scanning direction, a case where the refractive power is exhibited in the main scanning direction, but no refractive power is exhibited in the sub-scanning direction is described. As illustrated in FIG. 13A, by disposing the dioptric system 80, a refractive power (hereinafter may be referred to as a positive refractive power) of refracting image edge light, which is the light that has passed through the dioptric system 80 indicated by Lix+ and Lix- in the main scanning direction, toward the image center is applied. When such a refractive power is applied, in FIG. 13A, beams of the deflected light, which correspond to the image edges, made incident on the screen 15 are indicated as Ljx+ and Ljx-, respectively. Therefore, in FIG. 13A, an angle between the deflected light, which corresponds to the image edge, made incident on the screen 15 and the light, which corresponds to the light ray of the intermediate image 40 at the image edge diverged by the screen 15 and traveling toward the eyellipse center, in other words, the deflected light corresponding to the image edge, is denoted as angular differences Δθx+' and Δθx-' formed between the lines Ljx+ and Lox+, and the lines Ljx- and Lox-. As a result, Δθx+' and Δθx-' are smaller than Δθx+ and Δθx- in FIG. 12A, respectively. In contrast, since the dioptric system 80 has no refractive power in the sub-scanning direction, Δθy+ and Δθy- remain the same in both of FIG. 12B and FIG. 13B.

As an example, a case where the optical path length between the light deflector 13 and the dioptric system 80 is To, and the dioptric system 80 is a cylindrical mirror which is curved by a curvature radius Rx in FIG. 13A is assumed. In this case, Δθx' is equal to 6.5° when conditions that Rx = -200, To = 40, Ta = 100, Tb = 300, Tc = 3100, Td = 3600, Ex = 130, and Ey = 40 apply. That is, the angular difference can be made relatively small as compared to the angular difference Δθx of FIG. 12A, which is 11.2°. Therefore, it is possible to verify an advantage of being able to improve the brightness of the virtual image 45 at the image edge. More specifically, it is possible to verify an advantage of being able to improve the brightness at the image edge in the main scanning, in particular, by arranging the dioptric system 80 such as a cylinder mirror, and causing the light flux to be efficiently diverged in the eye-box area.

In contrast, since the dioptric system 80 has no refractive power in the sub-scanning direction, as illustrated in FIG. 13B, the scanning lines Li+ and Li- are the same as the scanning lines Li+ and Li- in FIG. 12B. That is, Δθy+ and Δθy- are 4.1° in both of FIG. 12B and FIG. 13B.

As described above, the dioptric system 80 has the refractive power of reducing an angle between the deflected light corresponding to the image edge, which is the deflected light corresponding to the image edge of the virtual image, of beams of the deflected light being incident on the screen 15, and the deflected light corresponding to the image edge, which is generated from the deflected light being incident on and diverged by the screen 15 as the divergent light to reach the observer's viewpoint. Since the refractive power in the main scanning direction is greater than the refractive power in the sub-scanning direction, by providing the dioptric system 80 between the light deflector 13 and the screen 15, the angles as discussed above in the main scanning and the sub scanning can be approximated to each other. Consequently, brightness deviation in the plane of the virtual image 45 can be decreased.

In the above, the case where the refractive power is positive has been described. However, depending on the layout of the display system 1, and the property of each optical system, the angular difference between the incident angle of light entering a divergence optical system and the emission angle of the emission light may be reduced when a negative refractive power is applied. That is, the angular difference may be reduced when a light ray, which corresponds to the image edge, made incident on the divergence optical system, is refracted in a direction opposite to the image center. In such a case, by carrying out comparison of the magnitude of the refractive power in the negative direction, the refractive power in the main scanning direction may be increased as compared to the refractive power in the sub-scanning direction.

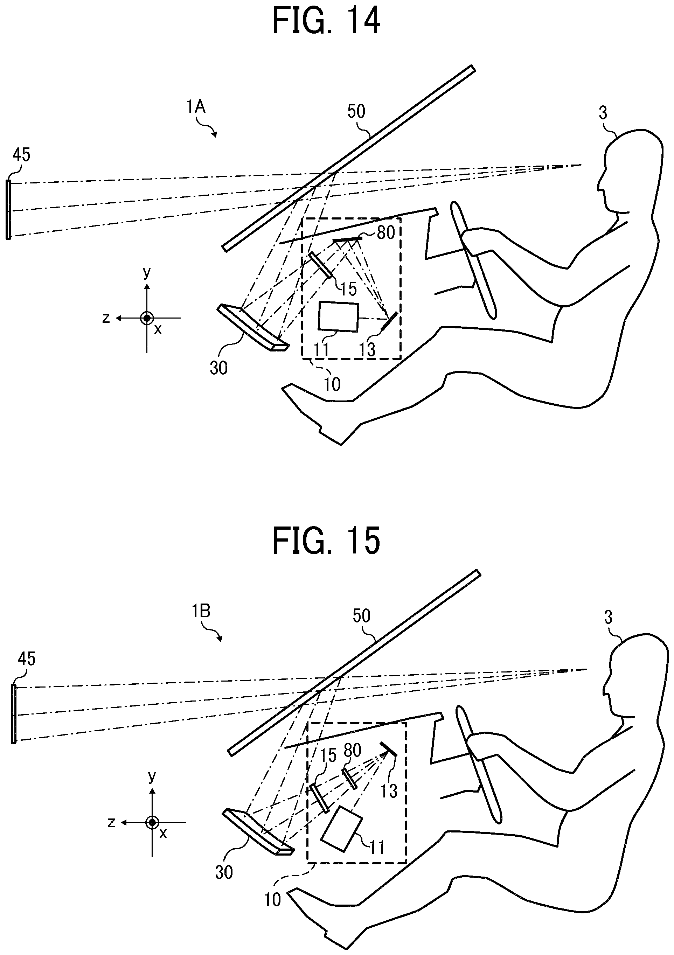

FIG. 14 is a diagram illustrating a display system 1A when a reflecting mirror having a positive refractive power in the main scanning direction is employed as the dioptric system 80, according to a first modification of the present disclosure. In this case, as illustrated in FIG. 14, the deflected light, which is the light emitted from the light deflector 13 and is deflected, is reflected by the dioptric system 80, and the reflected light enters the screen 15. By adopting a reflecting mirror as the dioptric system 80 as described above, no chromatic aberration occurs. Therefore, it is possible to provide a good-quality image in which no color shift occurs even if multiple light sources configured to emit light beams of different wavelengths are included.

FIG. 15 is a diagram illustrating a display system 1B when a lens having a positive refractive power in the main scanning direction is employed as the dioptric system 80, according to a second modification of the present embodiment. In this case, as illustrated in FIG. 15, the deflected light, which is the light emitted from the light deflector 13 and is deflected, is transmitted through the dioptric system 80, and the transmitted light enters the screen 15. By adopting a transmission lens as the dioptric system 80 as described above, a light ray does not need to be turned back. Thus, when a display device is mounted on a vehicle or the like, the present configuration may be advantageous in terms of the layout considering the display system 1 and the entire vehicle.

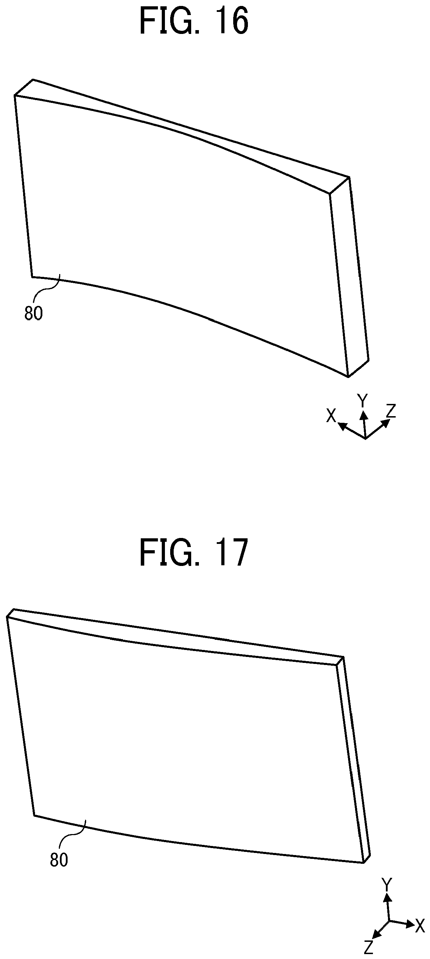

FIG. 16 is a diagram illustrating a first example of the optical element of the dioptric system 80, according to the present embodiment. FIG. 16 illustrates an example of the shape of a mirror having a positive refractive power in the main scanning direction. By adopting a reflecting mirror as the dioptric system 80, no chromatic aberration occurs. Therefore, it is possible to provide a good-quality image in which no color shift occurs even if multiple light sources configured to emit light beams of different wavelengths are included.

FIG. 17 is a diagram illustrating a second example of the optical element of the dioptric system 80, according to the present embodiment. FIG. 17 illustrates an example of the shape of a lens having a positive refractive power in the main scanning direction. By adopting a transmission lens as the dioptric system 80, a light ray does not need to be turned back, and such a configuration may be advantageous in terms of the vehicle layout.

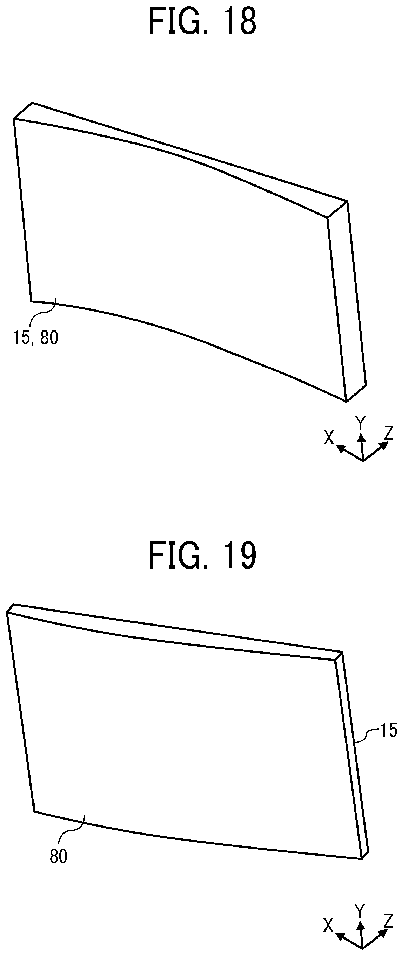

FIG. 18 is a diagram illustrating a third example of the optical element of the dioptric system 80, according to the present embodiment. A reflecting mirror illustrated in FIG. 18 includes a reflection surface as the dioptric system 80 and a diverging surface of the screen 15 as the divergence optical system on the same reflection surface. In other words, a refractive optical surface of the dioptric system 80 and a divergent optical surface of the screen 15 as the divergence optical system are the same optical surface. For example, a configuration in which a micromirror array is arranged on a reflecting mirror surface applies. Owing to such a configuration, $\Delta\theta$ can be suitably reduced while diverging the incident light flux by the same optical element at a predetermined divergence angle. Consequently, the number of components of the device can be reduced.

FIG. 19 is a diagram illustrating a fourth example of the optical element of the dioptric system 80, according to the present embodiment. A transmission lens illustrated in FIG. 19 includes a refractive optical surface and a divergent optical surface. For example, as illustrated in FIG. 19, a configuration in which a refracting surface serving as the dioptric system 80 is provided on the incidence surface side, and a diverging surface formed by arranging a microlens array serving as the divergence optical system is provided on the emitting surface side is applicable. Owing to such a configuration, it is possible to complete the function of diffusing the incident light flux at a predetermined diffusion angle while suitably reducing $\Delta\theta$ within the same optical element. The same advantage can be obtained from the other configurations not limited to the configuration of FIG. 19. That is, the same advantage can be obtained from a configuration in which the microlens array is provided on the incidence surface side, and the refracting surface is disposed on the emitting surface side. Alternatively, there may be cases where the incidence surface includes an incidence surface as the dioptric system 80 and a diverging surface of the screen 15 as the divergence optical system, or the emitting surface includes an emitting surface as the dioptric system 80 and a diverging surface of the screen 15 as the divergence optical system. Even in such cases, the same advantage can be obtained.

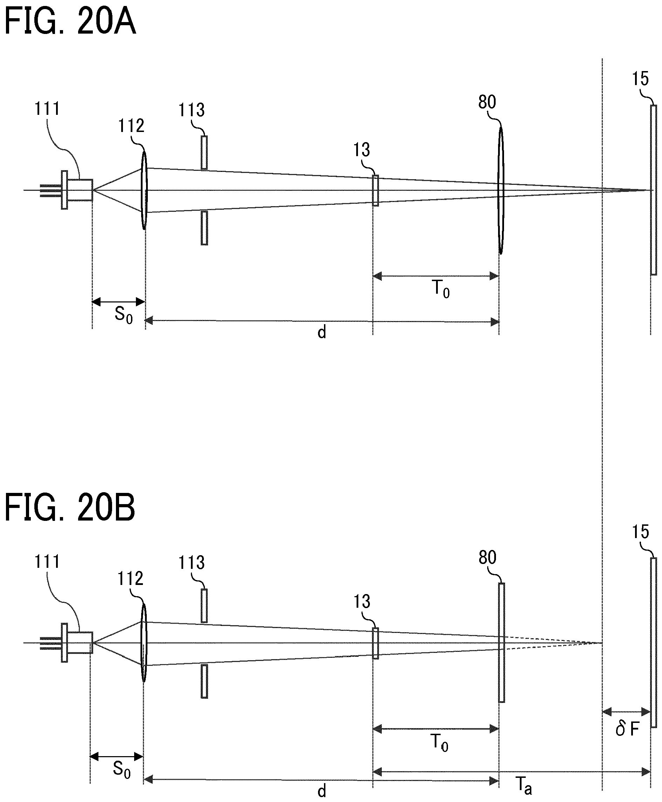

FIGS. 20A and 20B are conceptual diagrams of the astigmatic difference produced by the dioptric system 80, according to the present embodiment. FIGS. 20A and 20B illustrate cases where the dioptric system 80 has a positive refractive power only in the main scanning direction. FIG. 20A is a cross-sectional view in the main scanning direction, and FIG. 20B is a cross-sectional view in the sub-scanning direction. As illustrated in FIG. 20A, while the focal length in the sub-scanning direction is the focal length of the optical element including the dioptric system 80, the focal length in the main scanning direction illustrated in FIG. 20B is shifted by $\delta F$ with respect to the screen 15 which is a surface to be scanned. A focal point shift amount $\delta F$ can be obtained as follows on the basis of the Snell's law.

First Formula

$$\Delta f = \frac{S_0 f_1}{f_1 + S_0} - \left( \frac{1}{\dfrac{S_0 f_1}{f_1 + S_0} - d} + \frac{1}{f_2} \right)^{-1} - d$$

In the above, So represents a distance between a laser emission point of the light source element 111 and a lens 112 disposed between the light source element 111 and the light deflector 13, f1 represents a focal length of the lens 112, f2 represents a focal length of the dioptric system 80, and d represents a distance between the lens 112 and the dioptric system 80.

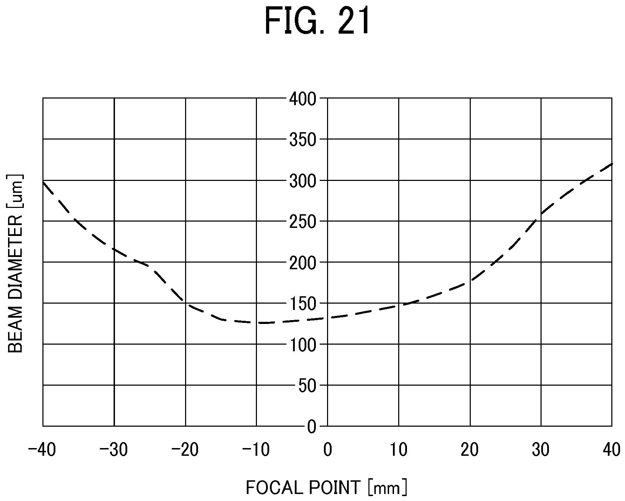

FIG. 21 illustrates positional dependence of a beam diameter when the focal length of the lens 112 is 8 mm, and the diameter of an aperture 113 is 1.2 mm.

The beam diameter is intended as the diameter of a peripheral portion at which the intensity is decreased to intensity corresponding to 13.5% of the intensity at the central axis. Further, as regards the focal point, a point on the screen 15 is assumed as 0. As illustrated in the graph of FIG. 21, a tendency that the beam diameter increases sharply at a position shifted by $\pm$ 20mm or more from the focal point can be confirmed. Accordingly, with the aim of reducing speckle, in order to make the diameter 156a of the incident light flux sufficiently small relative to the pitch 155 of the microlens array illustrated in FIG. 7, the focal point shift $\delta$F of the dioptric system 80, which is the cylinder mirror, should be designed to be $\pm$ 20 mm or less.

In other words, according to the first formula, the focal length, spacing, and the like of the dioptric system 80, which is a cylinder mirror by way of example, may be set such that the relationship in the second formula is satisfied. Thereby, it is possible to reduce the size of the display device while suppressing brightness reduction and speckle noise degradation.

## Second Formula

$$-20 \leq \Delta f \leq 20$$

Numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

**Claims**

1. A display device (10) comprising:

    a light source (11) configured to emit light;
    a light deflector (13) configured to deflect the light incident on the light deflector (13) in a main scanning direction and a sub-scanning direction;
    a divergence optical system (15) configured to diverge the light deflected by the light deflector (13) to form a virtual image (45) to be visually recognized by an observer (3); and
    a dioptric system (80) disposed on an optical path between the light deflector (13) and the divergence optical system (15) to refract the light deflected by the light deflector (13) to be made incident on the divergence optical system (15), the dioptric system (80) having a refractive power different in the main scanning direction than in the sub-scanning direction.

2. The display device (10) according to claim 1, wherein
    the refractive power reduces an angle that a part of the light that is deflected by the light deflector (13) and is incident on the divergence optical system (15) and corresponds to an edge of the virtual image (45) forms with the light diverged by the divergence optical system (15) to reach a viewpoint of the observer (3), and
    the refractive power in the main scanning direction is greater than the refractive power in the sub-scanning direction.

3. The display device (10) according to claim 1 or 2, wherein the dioptric system (80) comprises a reflecting mirror.

4. The display device (10) according to claim 1 or 2, wherein the dioptric system (80) comprises a transmission lens.

5. The display device (10) according to any one of claims 1 to 4, wherein the dioptric system (80) and the divergence optical system (15) have a similar optical element.

6. The display device (10) according to claim 5, wherein a refractive optical surface of the dioptric system (80) and a divergent optical surface of the divergence optical system (15) have a similar optical surface.

7. The display device (10) according to any one of claims 1 to 6, wherein

$$\Delta f = \frac{S_0 f_1}{f_1 + S_0} - \left( \frac{1}{\frac{S_0 f_1}{f_1 + S_0} - d} + \frac{1}{f_2} \right)^{-1} - d$$

and

$$-20 \leq \Delta f \leq 20$$

are satisfied, where So denotes a distance between the light source (11) and a lens disposed between the light source (11) and the light deflector (13), f1 denotes a focal length of the lens, f2 denotes a focal length of the dioptric system (80), and d denotes a distance between the lens and the dioptric system (80).

8. A display system (1) comprising:

the display device (10) according to any one of claims 1 to 7;
an imaging optical system configured to form the virtual image (45) with the light diverged by the divergence optical system (15); and
a reflector (50) configured to reflect light emitted from the imaging optical system.

9. A mobile object comprising the display system (1) according to claim 8, wherein the reflector (50) is a windshield (50) configured to reflect the light diverged by the divergence optical system (15).

# FIG. 1

# FIG. 2

# FIG. 3

# FIG. 4

# FIG. 5

EP 3 644 108 A1

# FIG. 6

# FIG. 7A

# FIG. 7B

# FIG. 8

# FIG. 9

# FIG. 10A

DIVERGENCE ANGLE IN MLA

# FIG. 10B

FIG. 11

EP 3 644 108 A1

FIG. 12A

FIG. 12B

FIG. 13A

FIG. 13B

# FIG. 14

# FIG. 15

# FIG. 16

80

Y
X Z

# FIG. 17

80

Y
X
Z

# FIG. 18

15, 80

X Y Z

# FIG. 19

15

80

X Y Z

FIG. 20A

FIG. 20B

# FIG. 21

Europäisches
Patentamt

European
Patent Office

Office européen
des brevets

# EUROPEAN SEARCH REPORT

Application Number

EP 19 19 8417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 944 986 A1 (RICOH CO LTD [JP]) 18 November 2015 (2015-11-18) | 1-4,8,9 | INV. G02B26/12 G02B27/01 G02B3/00 G02B27/48 |
| Y | * paragraphs [0020] - [0021], [0046] - paragraph [0050]; figures 1,3,6 * | 5,6 | |
| A | US 2013/021224 A1 (FUJIKAWA TAKAYUKI [JP] ET AL) 24 January 2013 (2013-01-24) * paragraphs [0051], [0062] - paragraph [0066]; figures 4-6 * | 4 | |
| Y | EP 3 104 212 A2 (RICOH CO LTD [JP]) 14 December 2016 (2016-12-14) * paragraphs [0209] - [0211], [0379] - paragraph [0383]; figures 18A, 18B, 40,41 * | 5,6 | |
| X | WO 2014/180509 A1 (LEMOPTIX SA [CH]) 13 November 2014 (2014-11-13) * paragraphs [0108] - [0115], [0127] - paragraph [0138]; figures 2,4a,5a-5c * | 1,3,5, 7-9 | |

TECHNICAL FIELDS
SEARCHED (IPC)

G02B

The present search report has been drawn up for all claims

| Place of search | Date of completion of the search | Examiner |
|---|---|---|
| Munich | 18 March 2020 | Feeney, Orla |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 8417

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2020

| Patent document cited in search report | | Publication date | Patent family member(s) | | Publication date |
|---|---|---|---|---|---|
| EP 2944986 | A1 | 18-11-2015 | EP | 2944986 A1 | 18-11-2015 |
| | | | JP | 6617947 B2 | 11-12-2019 |
| | | | JP | 2015232693 A | 24-12-2015 |
| US 2013021224 | A1 | 24-01-2013 | CN | 102902064 A | 30-01-2013 |
| | | | DE | 102012106638 A1 | 24-01-2013 |
| | | | JP | 5370427 B2 | 18-12-2013 |
| | | | JP | 2013025205 A | 04-02-2013 |
| | | | KR | 20130012109 A | 01-02-2013 |
| | | | US | 2013021224 A1 | 24-01-2013 |
| EP 3104212 | A2 | 14-12-2016 | NONE | | |
| WO 2014180509 | A1 | 13-11-2014 | KR | 20150140815 A | 16-12-2015 |
| | | | KR | 20170136016 A | 08-12-2017 |
| | | | US | 2016085084 A1 | 24-03-2016 |
| | | | US | 2019129196 A1 | 02-05-2019 |
| | | | WO | 2014180509 A1 | 13-11-2014 |

EPO FORM P0459

For more details about this annex : see Official Journal of the European Patent Office, No. 12/82

**REFERENCES CITED IN THE DESCRIPTION**

**Patent documents cited in the description**

- JP 2013061554 A

- JP 2009128659 A